# FASCICULE DE BREVET EUROPEEN

(11) **EP 1 755 924 B1**
(45) Date de publication et mention de la délivrance du brevet: **17.10.2007**
(21) Numéro de dépôt: 05777211.3
(22) Date de dépôt: 14.06.2005
(51) Int. Cl.: B60R 13/02, B60K 37/00

(54) **PIECE D'HABILLAGE INTERIEUR DE VEHICULE AUTOMOBILE ET PROCEDE DE FABRICATION D'UNE TELLE PIECE D'HABILLAGE**
INNENAUSSTATTUNG EINES KRAFTFAHRZEUGS UND HERSTELLUNGSVERFAHREN DAFÜR
MOTOR VEHICLE INTERIOR FITTING AND PRODUCTION METHOD THEREOF

(30) Priorité: 15.06.2004 FR 0406486
(43) Date de publication de la demande: 28.02.2007
(73) Titulaire: Faurecia Interieur Industrie, 92000 Nanterre (FR)
(72) Inventeur: TRILLAT, Sébastien, F-78300 Poissy (FR); STOOF, Freddy, F-68180 Horbourg Wihr (FR)
(74) Mandataire: Habasque, Etienne J. Jean-François
(86) Numéro de dépôt international: PCT/FR2005/001478
(87) Numéro de publication internationale: WO 2006/003324

(56) Documents cités:
- EP-A- 0 083 701
- EP-A- 1 008 492
- DE-A- 10 230 410
- US-A- 5 658 652
- US-A1- 2003 201 571

## Description

L'invention concerne une pièce d'habillage intérieur de véhicule automobile en matière plastique comportant plusieurs zones d'aspects différents.

EP-A-1 1008 492 divulgue un ensemble intérieur en matière plastique comprenant plusieurs pièces constituées du même matériau, adjacentes selon des zones de contact et recouvertes par un élément secondaire.

On connaît des planches de bord de véhicule automobile comportant des zones d'aspects différents et en particulier trois zones de couleurs différentes ou plus généralement d'aspects différents s'étendant successivement depuis la ligne de pare-brise jusqu'au bas de la planche de bord. Les différences d'aspect peuvent prendre des formes très diverses. Plus précisément, dans la suite, on entendra par aspects différents :
- d'une part des aspects esthétiques différents, par exemple, les trois zones présentent des couleurs différentes et/ou des grains différents et/ou des matités différentes, et/ou des brillances différentes, et
- d'autre part des propriétés mécaniques différentes, par exemple les trois zones présentent des souplesses différentes, et/ou des résistances mécanique différente, et/ou des touchés différents.

Ces divers types de différences peuvent se combiner, dans la mesure où deux plages d'aspect peuvent être différentes à la fois par la couleur, le grain, la brillance et propriétés mécaniques.

Pour réaliser de telles planches de bord ayant des plages de coloris ou plus généralement d'aspects différents, on peut décomposer la planche de bord en trois éléments distincts correspondant à chacune des plages de couleur ou d'aspect particulier, on moule chacune de ces parties distinctes puis on les assemble par collage ou par soudage. La conception d'une telle planche de bord et des outils associés est complexe du fait notamment de la gestion des jeux de fabrication et de montage entre les trois éléments, de la gestion des zones des interfaces d'assemblage. En outre, un tel procédé de fabrication présente l'inconvénient d'être relativement complexe à mettre en oeuvre, générant des temps de cycles de fabrication importants, notamment incompatibles avec les impératifs économiques et de volume de production des véhicules moyenne gamme ou économiques. Pour faciliter la conception et la fabrication de telles planches de bord, lorsque les différences d'aspects résultent uniquement de la couleur, on peut réaliser des opérations de peinture localisées correspondant à chacune des plages particulières de couleur. Mais cette technique présente l'inconvénient, comme la précédente, de laisser apparentes les zones de liaison entre deux plages de couleur différentes adjacentes. Ces zones de liaison entre deux plages de couleur adjacentes n'étant pas toujours bien définies ou clairement précisées, il en résulte des défauts d'aspect.

Le problème qui se pose pour la fabrication de planches de bord, se pose de façon plus générale pour la fabrication de pièces d'habillage intérieur de véhicule automobile.

Le but de la présente invention est de remédier à ces inconvénients en proposant un moyen de fabriquer une pièce d'habillage intérieur de véhicule automobile comportant plusieurs zones d'aspect d'aspect différent, et en particulier une planche de bord comportant trois plages de couleurs ou plus généralement d'aspects différents, s'étendant depuis la ligne de pare-brise jusqu'au bas de la planche de bord, qui soit facile à mettre oeuvre et qui en même temps conduisent à un bon aspect de la pièce finie.

A cet effet, l'invention a pour objet une pièce d'habillage intérieur de véhicule automobile qui comprend un insert en matière plastique ayant une première zone d'aspect et une seconde zone d'aspect dont l'aspect est différent de l'aspect de la première zone d'aspect, adjacente à la première zone d'aspect le long d'une ligne de liaison, et venant de moulage avec la première zone d'aspect, et un élément secondaire solidaire de l'insert, rapporté par moulage en regard et en recouvrement de la ligne de liaison.

De préférence, l'insert en matière plastique est obtenu par moulage par injection contrôlée, simultanée ou séquentielle, de deux matières plastiques d'aspect différent.

Les deux matières plastiques moulées par injection peuvent être constituées d'un même polymère mais comportent des additifs différents.

En particulier, la matière plastique dont est constituée une zone d'aspect peut comporter des additifs destinés à lui conférer une bonne tenue au choc.

Les deux matières plastiques dont est constituée l'insert peuvent être de couleurs différentes.

Les deux zones d'aspect de l'insert peuvent également avoir un grainage différent.

Les deux matières plastiques dont est constitué l'insert sont, de préférence, du polypropylène auquel est éventuellement ajouté au moins un additif et un colorant.

L'élément secondaire peut être constitué de polyuréthane auquel est ajouté un colorant.

En particulier, les deux zones d'aspect de l'insert et l'élément secondaire peuvent être de couleurs différentes.

Les deux parties de moule d'injections correspondant aux deux zones d'aspect de la pièce d'habillage intérieur d'un véhicule automobile, peuvent présenter un grainage différent induisant un aspect esthétique différent pour chaque zone.

Dans une forme de réalisation, l'élément secondaire comprend un complexe d'aspect comprenant une peau d'aspect colorée, par exemple en PVC ou TPU, réalisée par exemple par roto-moulage ou thermoformage, et une couche de mousse constituée par exemple de polyuréthane expansé.

De préférence, les trois zones d'aspects différents sont au moins de couleurs différentes, néanmoins, dans une forme de réalisation, l'élément secondaire peut reprendre la couleur et/ou l'aspect esthétique de l'une des deux zones de l'insert.

L'invention concerne également un procédé pour fabriquer une telle pièce d'habillage intérieur de véhicule automobile selon lequel on réalise un insert bi matière par moulage par injection contrôlée, simultanée et/ou séquentielle, de deux matières plastiques de couleurs et/ou d'aspects différents, puis on réalise et on solidarise l'élément secondaire avec l'insert.

Pour réaliser et solidariser l'élément secondaire avec l'insert, on peut disposer l'insert dans un moule de moussage avec une peau d'aspect au moins en regard de la zone de liaison des deux zones d'aspect d'aspects différents de l'insert, et on solidaire la première pièce et la peau d'aspect par moussage d'une matière plastique.

On peut également réaliser et solidariser l'élément secondaire avec l'insert par un procédé de surmoulage de l'insert sur une peau d'aspect ou par un procédé de surmoulage d'un élément secondaire sur un insert.

Le procédé peut être mis en oeuvre sur une ligne de fabrication flexible permettant de réaliser et solidariser l'élément secondaire avec l'insert, aussi bien par moussage que par surmoulage. On peut alors, pour chaque pièce fabriquée, choisir le mode de fabrication en fonction de sa destination, par exemple en fonction de la gamme du véhicule sur lequel elle doit être montée.

La pièce d'habillage intérieur de véhicule automobile peut être, par exemple, une planche de bord, un panneau de porte, ou un élément d'ébénisterie.

L'invention va maintenant être décrite de façon plus précise mais non limitative en regard des figures annexées dans lesquelles :
- La figure 1 est une vue en perspective d'une planche de bord ayant trois plages de couleurs différentes,
- la figure 2 est une vue en coupe selon AA de la planche de bord de la figure 1 réalisée selon un mode de réalisation possible de l'invention.

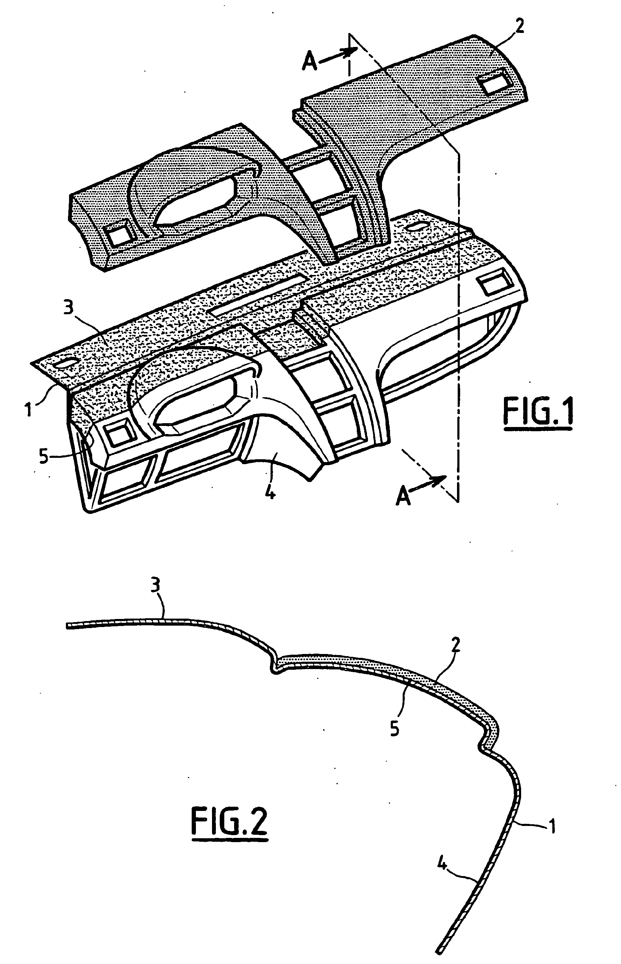

La planche de bord représentée à la figure 1 est constituée d'une première pièce ou insert 1 qui constitue un corps de planche de bord, et d'une deuxième pièce ou élément secondaire 2 qui constitue une coiffe. Ces pièces sont assemblées comme cela sera décrit plus loin.

Le corps de planche de bord 1 est une pièce en matière plastique réalisée par moulage par injection de deux matières plastiques différentes au moins par la couleur, éventuellement par l'aspect esthétique, ou même éventuellement par des propriétés mécaniques. Ce corps de planche de bord 1 comporte une première partie 3 située à proximité de la ligne pare-brise, et une deuxième partie 4 située au bas de la planche de bord. La première partie 3 est moulée dans une matière plastique d'une première couleur, la deuxième partie 4 est réalisée dans une matière plastique d'une autre couleur. Les deux parties 3 et 4 constituent des zones d'aspect ayant des aspects esthétiques différents. Comme on l'a dit, ces parties peuvent également avoir des propriétés mécaniques différentes, en particulier la partie 4 qui est la partie basse, peut être réalisée dans une matière conçue pour avoir une bonne tenue au choc. En particulier les deux parties 3 et 4 du corps de planche de bord 1, peuvent être réalisées en polypropylène complété éventuellement par un additif et par un colorant, le polypropylène étant moulé par injection dans un moule d'injection comportant deux barres chaudes indépendantes et alimentées par une presse bi-matière. La presse bi-matière injecte de façon contrôlée, simultanément et/ou séquentiellement d'une part un premier polymère constitué de polypropylène et d'un premier colorant, destiné à réaliser la partie 3 du corps de planche de bord 1, située près de la ligne de pare-brise, et d'autre part une deuxième matière plastique constituée de polypropylène auquel est ajouté un additif destiné à lui donner des propriétés de résistance au choc et un deuxième colorant, cette deuxième matière plastique étant destinée à réaliser la deuxième partie 4 du corps de planche de bord 1, située vers le bas de la planche de bord. Cette technique de moulage par injection bi-matière est connue en elle-même, elle suppose simplement que les deux matières plastiques qui sont moulées simultanément ou séquentiellement aient une compatibilité chimique permettant une bonne continuité structurelle du corps de planche à la jonction des deux zones, et des propriétés de moulage compatibles entres elles, en particulier des températures de fusion ou de moulage qui soient comparables ; ces températures de fusion peuvent être ajustées en dosant les additifs qui sont ajoutés au polypropylène. L'homme du métier sait faire les ajustements nécessaires.

Le moule peut présenter deux grainages différents respectivement pour la première et la deuxième partie de corps de planche de bord. Cette différence de grainage apporte une matité et/ou une brillance différente entre les deux parties injectée de corps de planche de bord.

La pièce ainsi obtenue est une pièce qui comporte deux parties ayant au moins des couleurs, plus généralement des aspects, et éventuellement des propriétés différentes. Ces deux parties sont séparées par une ligne de séparation 5 qui n'est pas toujours très nette. Pour camoufler cette ligne de séparation et pour réaliser une plage de la planche de bord d'une troisième couleur, on utilise une coiffe ou un bandeau rapporté 2 que l'on dispose au moins en regard de la ligne de séparation 5 des deux parties 3 et 4 du corps de la planche de bord.

Dans tous les cas, la coiffe ou bandeau ou, plus généralement, l'élément secondaire 2 est rapporté sur le corps de la planche de bord par moulage. Comme on le verra ci-dessous, le terme moulage utilisé ici recouvre tout procédé du type surmoulage ou moussage de matériau plastique.

Dans un premier mode de réalisation, on utilise un procédé de moussage pour réaliser la coiffe ou élément secondaire 2 et l'associer au corps de planche de bord ou insert 1.

Selon ce procédé, bien connu en tant que tel,
- on dispose le corps de planche de bord 1 obtenu par moulage par injection de polypropylène, dans le moule de moussage,
- on dispose dans le moule de moussage une peau d'aspect en matière plastique au moins en regard de la ligne de séparation 5, définissant ainsi un volume de moussage,
- on injecte une mousse expansible en matière plastique dans le volume de moussage, entre le corps de planche et la peau d'aspect,
- on laisse la mousse s'expanser dans le volume de moussage, assurant ainsi la solidarisation de la peau d'aspect sur le corps de planche de bord par l'intermédiaire de la mousse.

On réalise ainsi l'élément secondaire 2 qui constitue la coiffe qui vient camoufler la ligne 5 de liaison entre les parties 3 et 4 du corps de planche de bord 1.

La matière plastique constitutive de la peau d'aspect peut être par exemple du PVC ou TPU. La peau d'aspect peut être réalisée par exemple selon les procédés de roto-moulage ou thermoformage. La matière plastique expansible constitutive de couche de mousse peut être par exemple du polyuréthane expansible.

Dans un deuxième mode de réalisation du type surmoulage, le corps de planche de bord 1 est d'abord fabriqué puis est disposé dans un moule ayant une forme adaptée pour permettre la fabrication de la coiffe. On injecte alors une matière plastique pour fabriquer ladite coiffe. La coiffe et le corps de planche de bord sont alors solidaires l'un de l'autre.

Dans un troisième mode de réalisation également du type surmoulage, la coiffe comprenant la peau d'aspect avec ou sans mousse, est disposée dans le moule d'injection destiné à fabriquer le corps de la planche de bord avant d'opérer la bi-injection, puis on réalise la bi-injection pour fabriquer le corps de la planche de bord. La coiffe fait alors partie intégrante de la planche de bord.

Parmi les procédés qui viennent d'être décrits, le procédé selon lequel l'élément secondaire est rapporté par moussage sur l'insert, conduit à des pièces d'habillage mieux adaptées à des véhicules haut de gamme que les procédés de surmoulage.

L'insert étant adapté aux deux procédés de moussage ou surmoulage, pour fabriquer la pièce de l'habillage, on choisit le procédé par lequel on rapporte l'élément secondaire en fonction de sa destination, c'est-à-dire de la gamme (haute ou inférieur) du véhicule sur lequel la pièce d'habillage sera montée.

Les deux procédés peuvent être mis en oeuvre sur une même ligne de fabrication flexible dont on choisit le mode de fonctionnement en fonction de la qualité de la pièce qu'on veut réaliser.

Le choix du découpage des zones d'aspect est donné uniquement à titre illustratif, et bien entendu de nombreuses variantes de découpage sont envisageables sans sortir du périmètre de l'invention.

De même l'application de l'invention à d'autres parties de l'intérieur de véhicules automobiles comme par exemple les panneaux de porte ou les ébénisteries est envisageable sans sortir du périmètre de l'invention.

D'une façon générale, il s'agit des pièces d'habillage intérieur de véhicule automobile comprenant un insert comprenant deux zones d'aspect d'aspects différents, et un élément secondaire venant occulter la zone de liaison des deux zones d'aspect de l'insert.

## Revendications

1. Pièce d'habillage intérieur de véhicule automobile qui comprend un insert en matière plastique (1) ayant une première zone d'aspect et une seconde zone d'aspect dont l'aspect est différent de l'aspect de la première zone d'aspect, adjacente à la première zone d'aspect le long d'une ligne de liaison, et venant de moulage avec la première zone d'aspect, et un élément secondaire (2) solidaire de l'insert, rapporté par moulage sur l'insert en regard et en recouvrement de la ligne de liaison.

2. Pièce d'habillage intérieur de véhicule automobile selon la revendication 1, **caractérisée en ce que** l'insert en matière plastique (1) est obtenu par moulage par injection contrôlée, simultanée ou séquentielle, de deux matières plastiques d'aspect différent.

3. Pièce d'habillage intérieur de véhicule automobile selon la revendication 2, **caractérisée en ce que** les deux matières plastiques moulées par injection sont constituées d'un même polymère mais comportent des additifs différents.

4. Pièce d'habillage intérieur de véhicule automobile selon la revendication 3, **caractérisée en ce que** la matière plastique dont est constituée une zone d'aspect (4) comporte des additifs destinés à lui conférer une bonne tenue au choc.

5. Pièce d'habillage intérieur de véhicule automobile selon l'une quelconque des revendications 1 à 4, **caractérisée en ce que** les deux matières plastiques dont est constituée l'insert sont de couleurs différentes.

6. Pièce d'habillage intérieur de véhicule automobile selon l'une quelconque des revendications 1 à 5, **caractérisée en ce que** les deux zones d'aspect de l'insert ont un grainage différent.

7. Pièce d'habillage intérieur de véhicule automobile selon l'une quelconque des revendications 1 à 6, **caractérisée en ce que** les deux matières plastiques dont est constitué l'insert sont constituées de polypropylène auquel est éventuellement ajouté au moins un additif et un colorant.

8. Pièce d'habillage intérieur de véhicule automobile selon l'une quelconque des revendications 1 à 7, **caractérisée en ce que** l'élément secondaire (2) comprend un complexe d'aspect comprenant une peau d'aspect colorée en matière plastique tel que le PVC ou le TPU, et une couche de mousse constituée, par exemple, de polyuréthane expansé.

9. Pièce d'habillage intérieur de véhicule automobile selon la revendication 8, **caractérisée en ce que** l'élément secondaire (2) est constitué de polyuréthane auquel est ajouté un colorant.

10. Pièce d'habillage intérieur de véhicule automobile selon l'une quelconque des revendications 1 à 9, **caractérisée en ce que** les deux zones d'aspect de l'insert (3, 4) et l'élément secondaire (2) sont de couleurs différentes.

11. Pièce d'habillage intérieur de véhicule automobile selon l'une quelconque des revendications précédentes, **caractérisée en ce qu'**elle constitue une planche de bord ou un panneau de porte ou un élément d'ébénisterie.

12. Procédé pour fabriquer une pièce d'habillage intérieur de véhicule automobile selon l'une quelconque des revendications 1 à 11, **caractérisé en ce que** on réalise un insert bi matière par moulage par injection contrôlée simultanée et/ou séquentielle de deux matières plastiques d'aspect différent formant une première et une deuxième zone d'aspect adjacentes le long d'une ligne de liaison, puis on réalise et on solidarise l'élément secondaire en regard et en recouvrement de la ligne de liaison avec l'insert par moulage.

13. Procédé selon la revendication 12, **caractérisé en ce que** pour réaliser et solidariser l'élément secondaire avec l'insert, on dispose l'insert dans un moule de moussage, puis on dispose dans le moule de moussage une peau d'aspect au moins en regard de la ligne de séparation des deux zones d'aspect de l'insert, on injecte une mousse expansible en matière plastique entre l'insert et la peau d'aspect, et on laisse la mousse s'expanser.

14. Procédé selon la revendication 12, **caractérisé en ce que** pour réaliser et solidariser l'élément secondaire avec l'insert, on utilise un procédé de surmoulage de l'insert sur une peau d'aspect ou un procédé de surmoulage d'un élément secondaire sur un insert.

15. Procédé selon la revendication 12, **caractérisé en ce qu'**il est mis en oeuvre sur une ligne de fabrication permettant de réaliser et solidariser l'élément secondaire avec l'insert aussi bien par moussage que par surmoulage, et pour chaque pièce on choisit le mode de fabrication, moussage ou surmoulage, en fonction de la gamme de véhicule auquel la pièce est destinée.

## Claims

1. Motor vehicle interior trim component comprising a plastic insert (1) having a first aspect area and a second aspect area whereof the aspect is different from the aspect of the first aspect area, adjacent to the first aspect area along a connecting line, and moulded in one piece with the first aspect area, and a secondary element (2) fixed to the insert, added by moulding onto the insert opposite and covering the connecting line.

2. Motor vehicle interior trim component according to Claim 1, **characterised in that** the plastic insert (1) is obtained by simultaneous or sequential controlled injection moulding of two plastics of different aspect.

3. Motor vehicle interior trim component according to Claim 2, **characterised in that** the two injection-moulded plastics consist of the same polymer but comprise different additives.

4. Motor vehicle interior trim component according, to Claim 3, **characterised in that** the plastic constituting one aspect area (4) comprises additives intended to give it good impact resistance.

5. Motor vehicle interior trim component according to any one of Claims 1 to 4, **characterised in that** the two plastics constituting the insert are of different colours.

6. Motor vehicle interior trim component according to any one of Claims 1 to 5, **characterised in that** the two aspect areas of the insert have different graining.

7. Motor vehicle interior trim component according to any one of Claims 1 to 6, **characterised in that** the two plastics constituting the insert consist of polypropylene to which an additive and a colorant are optionally added.

8. Motor vehicle interior trim component according to any one of Claims 1 to 7, **characterised in that** the secondary element (2) comprises an aspect complex comprising a coloured aspect skin made of a plastic such as PVC or TPU and a foam layer consisting, for example, of expanded polyurethane.

9. Motor vehicle interior trim component according to Claim 8, **characterised in that** the secondary element (2) consists of polyurethane to which a colorant is added.

10. Motor vehicle interior trim component according to any one of Claims 1 to 9, **characterised in that** the two aspect areas of the insert (3, 4) and the secondary element (2) are of different colours.

11. Motor vehicle interior trim component according to any one of the preceding claims, **characterised in that** it forms a dashboard or a door panel or a fitment element.

12. Method for manufacturing a motor vehicle interior trim component according to any one of Claims 1 to 11, **characterised in that** a bi-material insert is produced by simultaneous and/or sequential controlled injection moulding of two plastics of different aspect forming a first and a second aspect area which are adjacent along a connecting line and then the secondary element is produced and fixed to the insert, opposite and covering the connecting line, by moulding.

13. Method according to Claim 12, **characterised in that**, for producing and fixing the secondary element to the insert, the insert is arranged in a foaming mould, then an aspect skin is arranged in the foaming mould at least opposite the separation line of the two aspect areas of the insert, an expandable plastic foam is injected between the insert and the aspect skin and the foam is left to expand.

14. Method according to Claim 12, **characterised in that**, for producing and fixing the secondary element to the insert, a method of overmoulding the insert onto an aspect skin or a method of overmoulding a secondary element onto an insert is used.

15. Method according to Claim 12, **characterised in that** it is implemented on a production line allowing the secondary element to be produced and fixed to the insert by both foaming and overmoulding and for each component the manufacturing method, foaming or overmoulding, is chosen according to the vehicle range for which the component is intended.

## Patentansprüche

1. Innenverkleidungsteil für ein Kraftfahrzeug, das einen Einsatz (1) aus Kunststoff, der eine erste Sichtzone und zweite Sichtzone besitzt, die ein anderes Aussehen als die erste Sichtzone besitzt, der ersten Sichtzone längs einer Verbindungslinie benachbart ist und mit der ersten Sichtzone einstückig ausgeführt ist, und ein mit dem Einsatz fest verbundenes Zusatzelement (2) umfasst, das durch Formung an dem Einsatz gegenüber und unter Überdeckung der Verbindungslinie angebracht ist.

2. Innenverkleidungsteil für ein Kraftfahrzeug nach Anspruch 1, **dadurch gekennzeichnet, dass** der Einsatz (1) aus Kunststoff durch gesteuerten gleichzeitigen oder sequenziellen Spritzguss von zwei Kunststoffen mit verschiedenem Aussehen hergestellt ist.

3. Innenverkleidungsteil für ein Kraftfahrzeug nach Anspruch 2, **dadurch gekennzeichnet, dass** die beiden durch Spritzguss geformten Kunststoffe aus ein und demselben Polymer bestehen, jedoch verschiedene Zusätze umfassen.

4. Innenverkleidungsteil für ein Kraftfahrzeug nach Anspruch 3, **dadurch gekennzeichnet, dass** der Kunststoff, aus dem eine Sichtzone (4) gebildet ist, Zusätze umfasst, die dazu bestimmt sind, ihm eine gute Stoßfestigkeit zu verleihen.

5. Innenverkleidungsteil für ein Kraftfahrzeug nach einem der Ansprüche 1 bis 4, **dadurch gekennzeichnet, dass** die beiden Kunststoffe, aus denen der Einsatz besteht, von verschiedenen Farben sind.

6. Innenverkleidungsteil für ein Kraftfahrzeug nach einem der Ansprüche 1 bis 5, **dadurch gekennzeichnet, dass** die beiden Sichtzonen des Einsatzes verschiedene Körnung aufweisen.

7. Innenverkleidungsteil für ein Kraftfahrzeug nach einem der Ansprüche 1 bis 5, **dadurch gekennzeichnet, dass** die beiden Kunststoffe, aus denen der Einsatz besteht, aus Polypropylen bestehen, dem gegebenenfalls mindestens ein Zusatz und ein Farbstoff zugesetzt sind.

8. Innenverkleidungsteil für ein Kraftfahrzeug nach einem der Ansprüche 1 bis 7, **dadurch gekennzeichnet, dass** das Zusatzelement (2) einen Sichtkomplex umfasst, der eine farbige Sichthaut aus Kunststoff wie PVC oder TPU und eine beispielsweise aus expandiertem Polyurethan bestehende Schaumschicht umfasst.

9. Innenverkleidungsteil für ein Kraftfahrzeug nach Anspruch 8, **dadurch gekennzeichnet, dass** das Zusatzelement (2) aus Polyurethan besteht, dem ein Farbstoff zugesetzt ist.

10. Innenverkleidungsteil für ein Kraftfahrzeug nach einem der Ansprüche 1 bis 9, **dadurch gekennzeichnet, dass** die beiden Sichtzonen des Einsatzes (3, 4) und des Zusatzelements (2) von verschiedenen Farben sind.

11. Innenverkleidungsteil für ein Kraftfahrzeug nach einem der vorhergehenden Ansprüche, **dadurch gekennzeichnet, dass** es ein Armaturenbrett oder eine Türtafel oder ein Gehäuseelement bildet.

12. Verfahren zur Herstellung eines Innenverkleidungsteils für ein Kraftfahrzeug nach einem der Ansprüche 1 bis 11, **dadurch gekennzeichnet, dass** man einen Bimaterialeinsatz durch gesteuerten gleichzeitigen und/oder sequenziellen Spritzguss von zwei Kunststoffen mit verschiedenem Aussehen herstellt, der eine erste und eine zweite Sichtzone bildet, die längs einer Verbindungslinie einander benachbart sind, und dann das Zusatzelement herstellt und mit dem Einsatz gegenüber und unter Überdeckung der Verbindungslinie durch Formung fest verbindet.

13. Verfahren nach Anspruch 12, **dadurch gekennzeichnet, dass** man zur Herstellung und festen Verbindung des Zusatzelements mit dem Einsatz den Einsatz in einer Schäumungsform anordnet, dann in der Schäumungsform eine Sichthaut mindestens gegenüber der Trennlinie der beiden Sichtzonen des Einsatzes anordnet, einen expandierbaren Kunststoffschaum zwischen den Einsatz und die Sichthaut einspritzt und den Schaum expandieren lässt.

14. Verfahren nach Anspruch 12, **dadurch gekennzeichnet, dass** man zur Herstellung und festen Verbindung des Zusatzelements mit dem Einsatz ein Verfahren zum Aufformen des Einsatzes auf eine Sichthaut oder ein Verfahren zum Aufformen eines Zusatzelements auf einem Einsatz verwendet.

15. Verfahren nach Anspruch 12, **dadurch gekennzeichnet, dass** es auf einer Fertigungsstrecke eingesetzt wird, die die Herstellung und feste Verbindung des Zusatzelements mit dem Einsatz sowohl durch Schäumung als auch durch Aufformung gestattet, und man für jedes Teil die Herstellungsart, Schäumung oder Aufformung, in Abhängigkeit von der Fahrzeugreihe, für die das Teil bestimmt ist, wählt.
